# EUROPÄISCHE PATENTANMELDUNG

(11) **EP 4 651 370 A1**
(43) Veröffentlichungstag der Anmeldung: **19.11.2025**
(21) Anmeldenummer: 25176578.0
(22) Anmeldetag: 15.05.2025
(51) Int. Cl.: H02S 20/23, F24S 25/615, F24S 25/634, F24S 25/636, F24S 25/60

(54) **VORRICHTUNG ZUM BEFESTIGEN VON SOLARPANEELEN AN EINEM STEHFALZ EINER DACHEINDECKUNG**

(30) Priorität: 15.05.2024 AT 80082024
(71) Anmelder: PREFA Aluminiumprodukte GmbH, 3182 Marktl (AT)
(72) Erfinder: SEYRLEHNER, Christian, 3251 Purgstall an der Erlauf (AT); LACKINGER, Dietmar, 3073 Stössing (AT)
(74) Vertreter: SONN Patentanwälte GmbH & Co KG

(57) **Zusammenfassung**

Vorrichtung zum Befestigen von Solarpaneelen an einem Stehfalz (15) einer Dacheindeckung (17), umfassend eine Befestigungsvorrichtung mit zwei Klemmbacken (2,3) und Klemmmitteln, wie z.B. wenigstens eine Schraube (8), zum Festklemmen der Klemmbacken (2,3) am Stehfalz (15), wobei die Klemmbacken (2,3) sich in entgegengesetzte Richtungen seitlich weg erstreckende Stützfüße (4) aufweisen, die zu beiden Seiten des Stehfalzes (15) zur Auflage auf der Dacheindeckung (17) ausgebildet sind, wobei wenigstens eine Klemmbacke (3) der Klemmbacken (2,3) eine Klemmvorrichtung (5) zum klemmenden Halten eines Solarpaneels trägt.

## Beschreibung

Die Erfindung betrifft eine Vorrichtung zum Befestigen von Solarpaneelen an einem Stehfalz einer Dacheindeckung, umfassend eine Befestigungsvorrichtung mit zwei Klemmbacken und Klemmmitteln, wie z.B. wenigstens eine Schraube, zum Festklemmen der Klemmbacken am Stehfalz, wobei die Klemmbacken sich in entgegengesetzte Richtungen seitlich weg erstreckende Stützfüße aufweisen, die zu beiden Seiten des Stehfalzes zur Auflage auf der Dacheindeckung ausgebildet sind.

Metalldeckungen stellen eine sehr langlebige und zumeist wartungsfreie Dacheindeckung bereit. Metalldeckungen eignen sich vor allem bei flachen Dachneigungen, lassen sich aber auch bei stärkerer Neigung und als Wandbekleidung verwenden. Metalldeckungen können auch auf gebogenen oder geschwungenen Dächern eingesetzt werden.

Metalldeckungen bestehen meist aus Metallbahnen, die mittels eines Falzes miteinander verbunden werden. Hierbei stellt die Doppelstehfalzdeckung eine der gängigsten Metalldachdeckungen dar. Das Doppelstehfalzdach besteht aus Scharen (Metallbahnen) mit seitlichen Aufkantungen, die mit der danebenliegenden Aufkantung doppelt verfalzt werden. Hierbei entsteht eine Falzhöhe von z.B. 23-30 mm oder mehr. Als Unterkonstruktion wird zumeist eine hinterlüftete Holzschalung mit Trennlage eingebaut.

Die zwischen benachbarten Metallbahnen angeordneten Stehfalze verlaufen in der Regel parallel zueinander und eignen sich zur Befestigung von Bauelementen auf dem Dach, wie z.B. zur Befestigung von Solarpaneelen.

Solarpaneele werden in zunehmendem Maße auf Dächern installiert, um Sonnenenergie in elektrische Energie umzuwandeln. Die Montage der Solarpaneele auf einem Dach stellt jedoch eine Herausforderung dar, da das Dach einerseits vor Beschädigungen und Undichtigkeiten geschützt werden muss, andererseits aber eine stabile und sichere Befestigung der Paneele gewährleistet sein muss.

Im Stand der Technik sind verschiedene Systeme zur Befestigung von Solarpaneelen auf Dächern bekannt. Häufig werden Montagerahmen oder -schienen verwendet, die auf dem Dach fixiert werden und auf denen anschließend die Solarpaneele montiert werden.

Diese bekannten Systeme weisen jedoch verschiedene Nachteile auf. Zum einen ist die Montage der Rahmen oder Schienen auf dem Dach zeitaufwändig und kostenintensiv. Es müssen zahlreiche Befestigungspunkte auf dem Dach geschaffen werden, was die Gefahr von Undichtigkeiten erhöht. Zum anderen werden durch die Rahmen oder Schienen zusätzliche Komponenten auf dem Dach installiert, die optisch störend wirken können und die Ästhetik des Daches beeinträchtigen.

Weiterhin besteht bei den bekannten Systemen die Gefahr, dass durch Windlasten oder Schneelasten hohe Kräfte auf die Befestigungspunkte wirken, was zu einer Beschädigung des Daches oder sogar zu einem Abreißen der Solarpaneele führen kann.

Der vorliegenden Erfindung liegt daher die Aufgabe zugrunde, eine Vorrichtung zum Befestigen von Solarpaneelen auf einem Dach bereitzustellen, die eine einfache, sichere und optisch ansprechende Montage ermöglicht und gleichzeitig eine hohe Stabilität gegenüber äußeren Kräften aufweist.

Weiterhin soll eine Vorrichtung geschaffen werden, die eine flexible Positionierung der Solarpaneele auf dem Dach ermöglicht und die einfach an verschiedene Dachtypen und Dachneigungen angepasst werden kann.

Zur Lösung dieser Aufgabe sieht die Erfindung bei einer Vorrichtung der eingangs genannten Art im Wesentlichen vor, dass wenigstens eine Klemmbacke der Klemmbacken eine Klemmvorrichtung zum klemmenden Halten eines Solarpaneels trägt.

Durch die erfindungsgemäße Ausgestaltung der Befestigungsvorrichtung wird eine einfache und sichere Montage der Solarpaneele direkt an den Stehfalzen der Dacheindeckung ermöglicht. Die Klemmbacken greifen den Stehfalz von beiden Seiten und klemmen die Befestigungsvorrichtung durch das Anziehen der Klemmmittel fest an den Stehfalz. Dadurch wird eine stabile und zuverlässige Verbindung zwischen der Befestigungsvorrichtung und dem Dach hergestellt.

Die seitlich wegragenden Stützfüße der Klemmbacken vergrößern die Auflagefläche der Befestigungsvorrichtung auf der Dacheindeckung und sorgen für eine gleichmäßige Verteilung der Kräfte. Dadurch wird die Stabilität der Befestigung erhöht und die Gefahr von Beschädigungen des Daches minimiert.

An den Klemmbacken ist erfindungsgemäß eine Klemmvorrichtung zum klemmenden Halten eines Solarpaneels ausgebildet. Dadurch können die Solarpaneele direkt an der Befestigungsvorrichtung fixiert werden, ohne dass zusätzliche Rahmen oder Schienen erforderlich sind. Dies vereinfacht die Montage erheblich und reduziert die Kosten. Gleichzeitig wird die Ästhetik des Daches verbessert, da keine störenden Zusatzkomponenten sichtbar sind.

Durch die direkte Befestigung der Solarpaneele an den Stehfalzen wird zudem eine flexible Positionierung der Paneele auf dem Dach ermöglicht. Die

Befestigungsvorrichtungen können an beliebigen Stellen der Stehfalze angebracht werden, sodass die Anordnung der Solarpaneele optimal an die Gegebenheiten des Daches angepasst werden kann.

Die erfindungsgemäße Vorrichtung ist universell einsetzbar und kann an verschiedene Falzbahnbreiten und Dachneigungen angepasst werden. Dadurch wird eine hohe Flexibilität bei der Installation von Solarpaneelen auf Dächern erreicht.

In einer bevorzugten Ausführungsform der Erfindung ist vorgesehen, dass die Klemmvorrichtung ein oberes und ein unteres Klemmelement mit in Abstand voneinander angeordneten, wenigstens einen Klemmspalt begrenzenden Klemmflächen aufweist, zwischen denen ein Solarpaneel klemmbar ist. Der Klemmspalt ist hierbei so dimensioniert, dass ein Solarpaneel ggf. unter Zwischenlegung eines Dichtungselements zwischen den Klemmflächen des oberen und unteren Klemmelements eingesetzt und durch Anziehen der Klemmelemente festgeklemmt werden kann. Die Klemmkräfte werden dabei gleichmäßig über die Klemmflächen verteilt, sodass eine schonende und materialgerechte Befestigung gewährleistet ist.

Vorzugsweise weist die Klemmvorrichtung zwei Klemmspalte auf, die in Bezug auf eine durch den Stehfalz gehende Mittelebene in entgegengesetzte Richtungen offen sind. Die Ausgestaltung der Klemmvorrichtung mit zwei in entgegengesetzte Richtungen öffnenden Klemmspalten ermöglicht es, zwei Solarpaneele an einer einzigen Befestigungsvorrichtung zu montieren, wobei ein erstes Solarpaneel sich in einer Richtung seitlich von der erfindungsgemäßen Befestigungsvorrichtung weg erstreckt und ein zweites Solarpaneel sich in einer entgegengesetzten Richtung von der Befestigungsvorrichtung weg erstreckt.

Die Anordnung von zwei Klemmspalten an einer Befestigungsvorrichtung eröffnet zudem die Möglichkeit, eine Vielzahl von Solarpaneelen in einer Reihe anzuordnen. Zwischen zwei benachbarten Paneelen ist dabei jeweils eine Befestigungsvorrichtung positioniert, die mit ihren beiden Klemmspalten die angrenzenden Paneele hält. Diese Anordnung ermöglicht eine platzsparende und optisch ansprechende Installation der Solarpaneele auf dem Dach. Durch die Verwendung einer einzigen Befestigungsvorrichtung für jeweils zwei Paneele wird die Anzahl der benötigten Komponenten reduziert, was die Montage vereinfacht und die Kosten senkt. In Fällen, wo eine Befestigungsvorrichtung mit nur einem Klemmspalt erforderlich ist, beispielsweise am Rand einer Reihe von Paneelen, kann die erfindungsgemäße Vorrichtung auch als Randelement verwendet werden.

Eine weitere bevorzugte Ausführung der Erfindung sieht vor, dass die wenigstens eine Klemmbacke in einem eine obere Seite des Stehfalzes überdeckenden Bereich ein Mittelteil des unteren Klemmelements ausbildet, von dem sich wenigstens ein Klemmflügel des unteren Klemmelements in wenigstens eine seitliche Richtung erstreckt. Dadurch wird eine einteilige Ausführung der wenigstens einen Klemmbacke und des unteren Klemmelements geschaffen. Gleichzeitig dient das Mittelteil als stabile Basis für die seitlich abgehenden Klemmflügel des unteren Klemmelements. Die Klemmflügel bilden zusammen mit den entsprechenden Klemmflügeln des oberen Klemmelements die Klemmspalte zur Aufnahme der Solarpaneele. Durch die seitliche Erstreckung der Klemmflügel wird eine große Auflagefläche für die Paneele geschaffen, was die Stabilität der Befestigung erhöht und eine gleichmäßige Verteilung der Klemmkräfte bewirkt.

Für die Befestigung von zwei Solarpaneelen ist hierbei bevorzugt vorgesehen, dass das untere Klemmelement zwei Klemmflügel aufweist, die sich vom Mittelteil in zwei entgegengesetzte seitliche Richtungen erstrecken.

In einer bevorzugten Ausführungsform der Erfindung ist das obere Klemmelement mit Spannmitteln, wie z.B. wenigstens einer Schraube, zum unteren Klemmelement hin spannbar. Dabei weist der Mittelteil des unteren Klemmelements vorzugsweise wenigstens ein Gewindeloch zum Einschrauben der wenigstens einen Schraube auf.

Diese Ausgestaltung der Klemmvorrichtung ermöglicht eine einfache und zuverlässige Fixierung des bzw. der Solarpaneele. Durch das Anziehen der Schraube wird das obere Klemmelement in Richtung des unteren Klemmelements gezogen und die Klemmkraft auf die eingelegten Solarpaneele erhöht. Zudem kann die Klemmkraft jederzeit nachreguliert werden, falls die Verbindung sich lockern sollte. Das Gewindeloch im Mittelteil des unteren Klemmelements bietet eine sichere und stabile Aufnahme für die Schraube. Durch die Integration des Gewindelochs in den massiven Mittelteil wird eine hohe Festigkeit und Langlebigkeit der Schraubverbindung gewährleistet.

Ein weiterer Vorteil der Spannbarkeit des oberen Klemmelements mittels Schrauben liegt in der vereinfachten Montage der Solarpaneele. Durch Abnehmen des oberen Klemmelements kann das Paneel in einfacher Weise auf das untere Klemmelement aufgelegt werden, ohne dass es seitlich in den Klemmspalt eingeschoben werden muss. Nach dem Auflegen des Solarpaneels auf das untere Klemmelement erfolgt die endgültige Befestigung durch Auflegen und Festspannen des oberen Klemmelements, wodurch das obere Klemmelement gegen das Paneel gedrückt und dieses sicher zwischen den beiden Klemmelementen eingeklemmt wird.

In einer bevorzugten Ausführungsform der Erfindung ist vorgesehen, dass das obere Klemmelement wenigstens ein Durchgangsloch für die Spannmittel, insbesondere die wenigstens eine Schraube, aufweist und das Durchgangsloch als schlüssellochförmiges Langloch mit einem Bereich größerer Weite und einem Bereich geringerer Weite ausgebildet ist. Durch die schlüssellochförmige Form mit unterschiedlichen Weitenbereichen können die Spannmittel, insbesondere die wenigstens eine Schraube, bereits in das untere Klemmelement vormontiert bereitgestellt werden. Die Montage des oberen Klemmelements erfolgt hierbei derart, dass beim Aufsetzen desselben die Schraube durch den Bereich größerer Weite des Langlochs geführt wird. In dieser Stellung ist das obere Klemmelement noch verschiebbar. Anschließend wird das obere Klemmelement in Längsrichtung des Langlochs in Richtung des Bereichs geringerer Weite verschoben, sodass die Schraube in diesem Bereich fixiert wird. Durch Anziehen der Schraube wird dann die endgültige Klemmung des Paneels erreicht. Die schlüssellochförmige Ausbildung des Durchgangslochs ermöglicht somit ein einfaches Aufsetzen und Ausrichten des oberen Klemmelements, bevor die eigentliche Klemmung erfolgt. Zudem kann das obere Klemmelement bei Bedarf schnell und einfach wieder gelöst und entfernt werden, indem das obere Klemmelement nach dem Lösen der Schraube so verschoben wird, dass die Schraube in den Bereich größerer Weite des Langlochs gelangt. Dies erleichtert Wartungs- und Reparaturarbeiten an den Solarpaneelen erheblich.

In einer weiteren bevorzugten Ausführungsform der Erfindung weist das obere Klemmelement eine den Bereich geringerer Weite des Langlochs umgebende Ausfräsung auf, die als Verrutschsicherung für einen Schraubenkopf dient. Beim Anziehen der Schraube wird der Schraubenkopf in die Ausfräsung hineingezogen und dort formschlüssig fixiert. Dadurch wird ein unbeabsichtigtes Verrutschen oder Herausgleiten des Schraubenkopfs aus dem Bereich geringerer Weite beim Festziehen der Schraube zuverlässig verhindert. Die Schraube bleibt stets in ihrer vorgesehenen Klemmposition und kann die erforderliche Klemmkraft dauerhaft aufrechterhalten. Selbst bei Vibrationen oder dynamischen Belastungen, wie sie beispielsweise durch Windkräfte auf die Solarpaneele wirken, bleibt die Schraubverbindung sicher und stabil. Die Ausfräsung fungiert somit als eine Art Rast- oder Arretiervorrichtung für den Schraubenkopf und gewährleistet eine dauerhaft zuverlässige Klemmung der Paneele.

In einer bevorzugten Ausführungsform der Erfindung weist der Mittelteil des unteren Klemmelements ein Element auf, das aus einem Zentriersteg oder einer Zentrierrille ausgewählt ist. Dieses Element wirkt mit dem am oberen Klemmelement ausgebildeten komplementären Element zusammen, das entsprechend aus einer Zentrierrille oder einem Zentriersteg besteht.

Die Anordnung von Zentriersteg und Zentrierrille an den beiden Klemmelementen bietet mehrere technische Vorteile. Beim Aufsetzen des oberen Klemmelements auf das untere Klemmelement greifen Zentriersteg und Zentrierrille ineinander und bewirken eine selbsttätige Ausrichtung und Zentrierung der beiden Teile zueinander. Dadurch wird sichergestellt, dass die Klemmelemente stets präzise übereinander positioniert sind. Montagefehler oder Ungenauigkeiten beim Aufsetzen des oberen Klemmelements werden somit zuverlässig vermieden. Ein weiterer Vorteil von Zentriersteg und Zentrierrille besteht in der Erhöhung der Stabilität und Festigkeit der Verbindung zwischen den Klemmelementen. Durch das formschlüssige Ineinandergreifen der beiden Elemente wird eine Relativbewegung oder ein Verkippen der Klemmelemente zueinander wirksam verhindert. Die Kräfte werden optimal zwischen den Klemmelementen übertragen und abgeleitet, sodass auch hohe Belastungen sicher aufgenommen werden können.

Hinsichtlich der Befestigung der erfindungsgemäßen Befestigungsvorrichtung am Stehfalz ist bevorzugt vorgesehen, dass die Klemmbacken an ihrer dem Stehfalz zugewandten Innenseite jeweils wenigstens einen nach innen vorstehenden Klemmsteg aufweisen. Dadurch wird eine verbesserte Klemmwirkung erzielt. Die Klemmstege bilden hierbei örtlich begrenzte Kontaktbereiche aus, entlang derer die Klemmbacken an beiden Seiten des Stehfalzes mit diesem zusammenwirken. Die auf die Klemmbacken ausgeübte Klemmkraft wird daher über eine geringere Kontaktfläche auf den Stehfalz übertragen, sodass im Kontaktbereich eine höhere Kraft wirkt und die Klemmwirkung verbessert wird. Gegebenenfalls werden die Klemmstege aufgrund der höheren kontaktflächenbezogenen Kraft in das Material des Stehfalzes eingedrückt, was eine weitere Maßnahme gegen ein unbeabsichtigtes Verrutschen der Befestigungsvorrichtung relativ zum Stehfalz mit sich bringt.

Bei aus Metallbahnen bestehenden Dacheindeckungen, insbesondere Doppelstehfalzdeckungen, erfolgt die Befestigung der Metallbahnen auf der Unterkonstruktion meist mittels sog. Haften. Die Hafte bilden unterhalb der Metallbahnen direkt neben dem Stehfalz Erhöhungen aus, welche Ausbeulungen in der Metallbahn bewirken. Zur Vermeidung solcher Ausbeulungen sind Metallbahnen bekannt, die an den Positionen der Hafte eine Freistellung (sog. Haftfreistellung) aufweisen, d.h. in diesem Bereich eine vorgeformte Erhöhung aufweisen, die einen Freiraum für die Hafte schaffen.

Gemäß einer bevorzugten Weiterbildung der vorliegenden Erfindung wird eine besondere Formgebung der Stützfüße geschaffen, welche den für die Anordnung einer Haftfreistellung erforderlichen Raum freilässt. Dabei weisen die Stützfüße im Bereich ihrer freien Enden jeweils einen Auflagebereich zur Auflage auf der Dacheindeckung auf, um seitlich des Stehfalzes jeweils eine Freistellung zwischen den Stützfüßen und der Dacheindeckung auszubilden.

Insbesondere kann hierbei vorgesehen sein, dass die Stützfüße im Bereich ihrer freien Enden eine Kröpfung aufweisen.

Um eine Beschädigung oder ein Durchscheuern der Metallbahnen zu vermeiden, weisen die Stützfüße im Bereich ihrer freien Enden bevorzugt Auflageelemente auf. Bevorzugt bestehen die Auflageelemente aus einem elastischen Material, wie z.B. aus einem Ethylen-Propylen-DienKautschuk.

Was die Ausführung der Klemmmittel zum Festklemmen der Klemmbacken am Stehfalz betrifft, sieht eine bevorzugte Ausführung vor, dass die Klemmbacken jeweils wenigstens ein Durchgangsloch für eine Schraube zum Festklemmen der Klemmbacken aufweisen.

Die Klemmbacken können den Rand des Durchgangslochs umgebend jeweils eine Auflagefläche für die Schraube bzw. eine mit der Schraube zusammenwirkende Schraubenmutter aufweisen, wobei die Auflageflächen der Klemmbacken parallel zueinander und vorzugsweise parallel zu einer Mittelebene der Vorrichtung verlaufen.

In einer bevorzugten Ausführungsform der Erfindung weisen die Stützfüße und/oder die Klemmflügel der beiden Klemmelemente an ihrem äußeren Rand eine vorspringende Anlagefläche auf. Diese Anlagefläche dient zur Lagesicherung eines elastischen Auflageelements, wie z.B. einer Gummidichtung. Durch die Ausbildung eines Vorsprungs oder einer Stufe wird eine definierte seitliche Auflagefläche für das elastische Auflageelement geschaffen. Die Gummidichtung oder ein anderes geeignetes elastisches Material kann in einfacher Weise auf die Klemmflügel aufgelegt und dort zuverlässig durch seitliche Anlage an die Anlagefläche positioniert werden. Die vorspringende Ausführung der Anlagefläche bewirkt dabei eine Lagesicherung des Auflageelements. Ein unbeabsichtigtes Verrutschen oder Herausgleiten der Gummidichtung aus ihrer vorgesehenen Position wird wirksam verhindert.

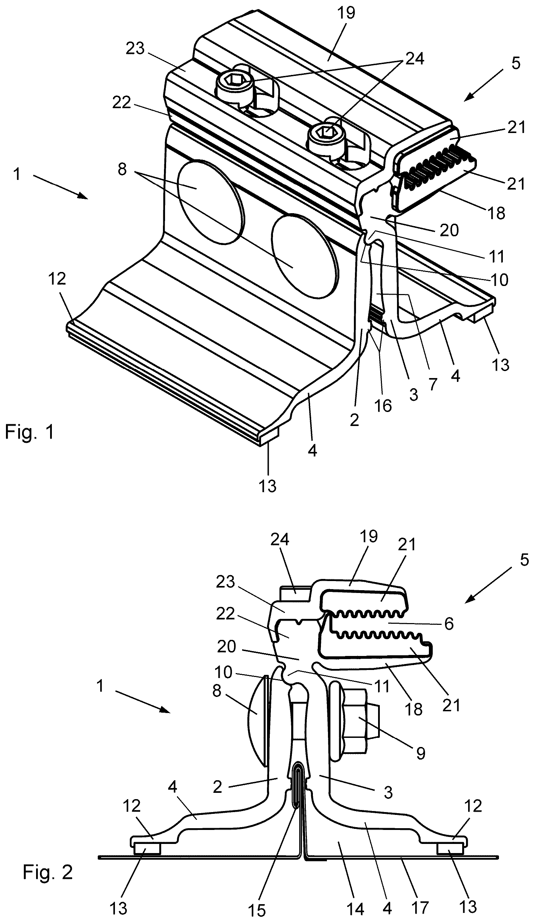

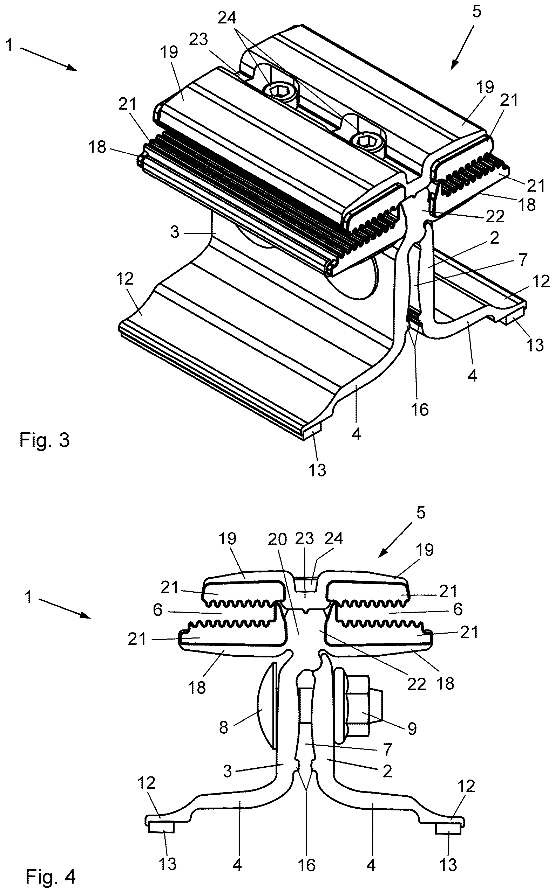

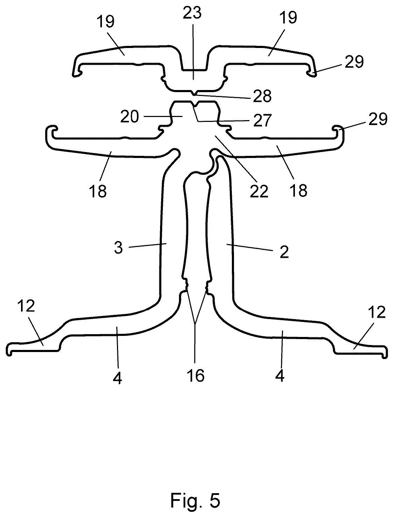

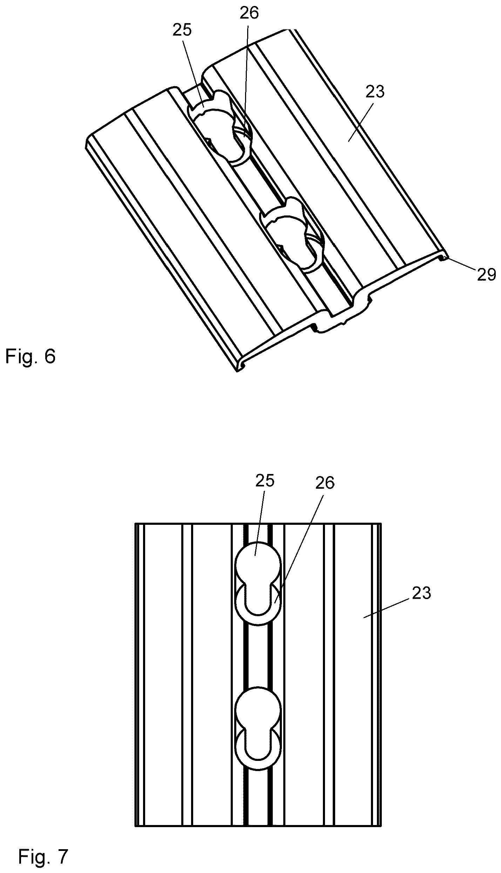

Die Erfindung wird nachfolgend anhand eines in der Zeichnung dargestellten Ausführungsbeispiels näher erläutert. In dieser zeigen Fig. 1 eine perspektivische Ansicht einer ersten Ausbildung der erfindungsgemäßen Befestigungsvorrichtung, Fig. 2 eine Frontalansicht der Befestigungsvorrichtung gemäß Fig. 1, Fig. 3 eine perspektivische Ansicht einer zweiten Ausbildung der erfindungsgemäßen Befestigungsvorrichtung, Fig. 4 eine Frontalansicht der Befestigungsvorrichtung gemäß Fig. 3, Fig. 5 eine Ansicht gemäß Fig. 4 in einer auseinandergezogenen Darstellung, Fig. 6 eine perspektivische Ansicht eines oberen Klemmelements und Fig. 7 eine Draufsicht auf das Klemmelement der Fig. 6.

In Fig. 1 und 2 ist die Befestigungsvorrichtung allgemein mit 1 bezeichnet. Die Befestigungsvorrichtung 1 umfasst eine erste Klemmbacke 2 und eine zweite Klemmbacke 3, die sich in entgegengesetzte Richtungen seitlich weg erstreckende Stützfüße 4 aufweisen. Der Zwischenraum 7 zwischen den Klemmbacken 2,3 dient dem Einklemmen eines Stehfalzes 15 (siehe Fig. 2). Die erforderliche Klemmkraft wird durch Festziehen einer von einem Schraubbolzen 8 und einer Schraubenmutter 9 gebildeten Schraubenverbindung aufgebracht. Zur Verbesserung der Klemmwirkung weisen die Klemmbacken 2,3 jeweils einen Klemmsteg 16 auf. Zur gegenseitigen Positionierung bzw. Führung der beiden Klemmbacken 2,3 ist die erste Klemmbacke 2 mit einer Ausnehmung 10 ausgebildet, in welche ein an der zweiten Klemmbacke 3 ausgebildeter Vorsprung 11 scharnierartig eingreift.

Die Stützfüße 4 weisen im Bereich ihrer freien Enden jeweils einen Auflagebereich 12 zur Auflage auf der Dacheindeckung 17 auf, um seitlich des Stehfalzes 15 jeweils eine Freistellung 14 zwischen den Stützfüßen und der Dacheindeckung auszubilden. Zu diesem Zweck sind die Stützfüße 4 im Bereich ihrer freien Enden mit einer Kröpfung ausgebildet. Im Bereich ihrer freien Enden weisen die Stützfüße 4 Auflageelemente 13 auf, die z.B. aus einem elastischen Material bestehen.

Die zweite Klemmbacke 3 trägt eine Klemmvorrichtung 5 zum klemmenden Halten eines Solarpaneels in einem Klemmspalt 6, der zwischen einem unteren Klemmflügel 18 des unteren Klemmelements 22 und einem oberen Klemmflügel 19 des oberen Klemmelements 23 ausgebildet wird. Als Zwischenlage ist jeweils ein elastisches Auflageelement 21 vorgesehen. Die zweite Klemmbacke 3 ist hierbei einstückig mit dem unteren Klemmelement 22 ausgebildet, indem die Klemmbacke 3 in einem eine obere Seite des Stehfalzes 15 überdeckenden Bereich ein Mittelteil 20 des unteren Klemmelements 18 ausbildet, von dem sich der Klemmflügel 18 in eine seitliche Richtung erstreckt.

Zum Zusammenspannen der Klemmelemente 22,23 ist das obere Klemmelement 23 mit Hilfe wenigstens einer Schraube 24 zum unteren Klemmelement 22 hin spannbar, wobei der Mittelteil 20 des unteren Klemmelements 22 wenigstens ein entsprechendes Gewindeloch zum Einschrauben der wenigstens einen Schraube 24 aufweist.

Bei der abgewandelten Ausbildung gemäß Fig. 3 und 4 weisen das untere Klemmelement 22 und das obere Klemmelement 23 jeweils zwei sich von einer Mittelebene in entgegengesetzte Richtungen erstreckende Klemmflügel 18 bzw. 19 auf, um zwei benachbarte Solarpaneele klemmend festzuhalten. Im Übrigen wurden die in Fig. 1 und 2 verwendeten Bezugszeichen beibehalten.

Bei der auseinandergezogenen Darstellung gemäß Fig. 5 ist ersichtlich, dass das untere Klemmelement 22 eine Zentrierrille 27 aufweist, in welche ein am oberen Klemmelement 23 ausgebildeter Zentriersteg 28 eingreift. Weiters ist ersichtlich, dass die Klemmflügel 18,19 an ihrem äußeren Rand jeweils eine vorspringende Anlagefläche 29 für die Lagesicherung des elastischen Auflageelements 21 (Fig. 2) aufweisen.

In Fig. 6 und 7 ist jeweils nur das obere Klemmelement 23 mit den Durchgangslöchern 25 für die Schrauben 24 dargestellt. Es ist ersichtlich, dass die Durchgangslöcher 25 jeweils als schlüssellochförmiges Langloch mit einem Bereich größerer Weite und einem Bereich geringerer Weite ausgebildet sind. Das obere Klemmelement 23 weist hierbei eine den Bereich geringerer Weite des Langlochs 25 umgebende Ausfräsung 26 auf, die als Verrutschsicherung für einen Schraubenkopf der Schraube 24 dient.

## Patentansprüche

1. Vorrichtung zum Befestigen von Solarpaneelen an einem Stehfalz (15) einer Dacheindeckung (17), umfassend eine Befestigungsvorrichtung mit zwei Klemmbacken (2,3) und Klemmmitteln, wie z.B. wenigstens eine Schraube (8), zum Festklemmen der Klemmbacken (2,3) am Stehfalz (15), wobei die Klemmbacken (2,3) sich in entgegengesetzte Richtungen seitlich weg erstreckende Stützfüße (4) aufweisen, die zu beiden Seiten des Stehfalzes (15) zur Auflage auf der Dacheindeckung (17) ausgebildet sind, wobei wenigstens eine Klemmbacke (3) der Klemmbacken (2,3) eine Klemmvorrichtung (5) zum klemmenden Halten eines Solarpaneels trägt.

2. Vorrichtung nach Anspruch 1, **dadurch gekennzeichnet, dass** die Klemmvorrichtung (5) ein oberes Klemmelement (23) und ein unteres Klemmelement (22) mit in Abstand voneinander angeordneten, wenigstens einen Klemmspalt (6) begrenzenden Klemmflächen aufweist, zwischen denen ein Solarpaneel klemmbar ist.

3. Vorrichtung nach Anspruch 1 oder 2, **dadurch gekennzeichnet, dass** die Klemmvorrichtung (5) zwei Klemmspalte (6) aufweist, die in Bezug auf eine durch den Stehfalz (15) gehende Mittelebene in entgegengesetzte Richtungen offen sind.

4. Vorrichtung nach Anspruch 2 oder 3, **dadurch gekennzeichnet, dass** die wenigstens eine Klemmbacke (3) in einem eine obere Seite des Stehfalzes (15) überdeckenden Bereich ein Mittelteil (20) des unteren Klemmelements (22) ausbildet, von dem sich wenigstens ein Klemmflügel (18) des unteren Klemmelements (22) in wenigstens eine seitliche Richtung erstreckt.

5. Vorrichtung nach Anspruch 4, **dadurch gekennzeichnet, dass** das untere Klemmelement (22) zwei Klemmflügel (18) aufweist, die sich vom Mittelteil (20) in zwei entgegengesetzte seitliche Richtungen erstrecken.

6. Vorrichtung nach einem der Ansprüche 2 bis 5, **dadurch gekennzeichnet, dass** das obere Klemmelement (23) mit Spannmitteln, wie z.B. wenigstens einer Schraube (24), zum unteren Klemmelement (22) hin spannbar ist, wobei der Mittelteil (20) des unteren Klemmelements (22) vorzugsweise wenigstens ein Gewindeloch zum Einschrauben der wenigstens einen Schraube (24) aufweist.

7. Vorrichtung nach einem der Ansprüche 4 bis 6, **dadurch gekennzeichnet, dass** das obere Klemmelement (23) wenigstens einen Klemmflügel (19) aufweist, der gemeinsam mit dem gegenüberliegenden Klemmflügel (18) des unteren Klemmelements (22) den Klemmspalt (6) begrenzt.

8. Vorrichtung nach Anspruch 6 oder 7, **dadurch gekennzeichnet, dass** das obere Klemmelement (22) wenigstens ein Durchgangsloch (25) für die Spannmittel, insbesondere die wenigstens eine Schraube (24), aufweist und das Durchgangsloch (25) als schlüssellochförmiges Langloch mit einem Bereich größerer Weite und einem Bereich geringerer Weite ausgebildet ist.

9. Vorrichtung nach Anspruch 8, **dadurch gekennzeichnet, dass** das obere Klemmelement (23) eine den Bereich geringerer Weite des Langlochs (25) umgebende Ausfräsung (26) als Verrutschsicherung für einen Schraubenkopf aufweist.

10. Vorrichtung nach einem der Ansprüche 4 bis 9, **dadurch gekennzeichnet, dass** der Mittelteil (20) ein Element ausgewählt aus einem Zentriersteg (28) und einer Zentrierrille (27) aufweist, der mit dem am oberen Klemmelement (23) ausgebildeten anderen Element ausgewählt aus dem Zentriersteg (28) und der Zentrierrille (27) zusammenwirkt.

11. Vorrichtung nach einem der Ansprüche 1 bis 10, **dadurch gekennzeichnet, dass** die Klemmbacken (2,3) an ihrer dem Stehfalz (15) zugewandten Innenseite jeweils wenigstens einen nach innen vorstehenden Klemmsteg (16) aufweisen.

12. Vorrichtung nach einem der Ansprüche 1 bis 11, **dadurch gekennzeichnet, dass** die Stützfüße (4) im Bereich ihrer freien Enden jeweils einen Auflagebereich (12) zur Auflage auf der Dacheindeckung (17) aufweisen, um seitlich des Stehfalzes (15) jeweils eine Freistellung (14) zwischen den Stützfüßen (4) und der Dacheindeckung (17) auszubilden.

13. Vorrichtung nach Anspruch 12, **dadurch gekennzeichnet, dass** die Stützfüße (4) im Bereich ihrer freien Enden eine Kröpfung aufweisen.

14. Vorrichtung nach einem der Ansprüche 1 bis 13, **dadurch gekennzeichnet, dass** die Stützfüße (4) im Bereich ihrer freien Enden insbesondere elastische Auflageelemente (13) aufweisen.

15. Vorrichtung nach einem der Ansprüche 1 bis 14, **dadurch gekennzeichnet, dass** die Klemmbacken (2,3) jeweils wenigstens ein Durchgangsloch für eine Schraube (8) zum Zusammenklemmen der Klemmbacken (2,3) aufweisen.

16. Vorrichtung nach Anspruch 15, **dadurch gekennzeichnet, dass** die Klemmbacken (2,3) den Rand des Durchgangslochs umgebend jeweils eine Auflagefläche für die Schraube (8) bzw. eine mit der Schraube (8) zusammenwirkende Schraubenmutter (9) aufweisen, wobei die Auflageflächen der Klemmbacken (2,3) parallel zueinander, und vorzugsweise parallel zu einer Mittelebene der Vorrichtung, verlaufen.

17. Vorrichtung nach einem der Ansprüche 1 bis 16, **dadurch gekennzeichnet, dass** die Stützfüße (4) und/oder die Klemmflügel (18,19) an ihrem äußeren Rand eine vorspringende Anlagefläche (29) für die Lagesicherung eines elastischen Auflageelements, wie z.B. einer Gummidichtung aufweisen.
